(19) **Europäisches Patentamt European Patent Office Office européen des brevets**

(11) **EP 4 745 560 A1**

(12) **EUROPEAN PATENT APPLICATION**

(43) Date of publication:
20.05.2026 Bulletin 2026/21

(21) Application number: 25187863.3

(22) Date of filing: **07.07.2025**

(51) International Patent Classification (IPC):
*G01N 21/3581* *(2014.01)*

(52) Cooperative Patent Classification (CPC):
**G01N 21/3581**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.11.2024 JP 2024199147**

(71) Applicant: **Sumitomo Heavy Industries, Ltd. Tokyo 141-6025 (JP)**

(72) Inventor: **INOUE, Kana Kanagawa, 237-8555, (JP)**

(74) Representative: **Louis Pöhlau Lohrentz Patentanwälte Postfach 30 55 90014 Nürnberg (DE)**

(54) **STATE DETERMINATION DEVICE, STATE DETERMINATION SYSTEM, AND STATE DETERMINATION METHOD**

(57) Provided is a technique that can determine a state of a measurement object with higher accuracy.

A state determination device (14) includes a state index generation unit (24) that generates, based on a spectroscopic spectrum obtained from electromagnetic waves transmitted through a measurement object (OBJ) or reflected by the measurement object (OBJ) when the measurement object (OBJ) is irradiated with the electromagnetic waves, a state index for determining a state of the measurement object (OBJ), and a state determination unit (26) that determines the state of the measurement object (OBJ) based on the state index of the measurement object (OBJ), in which the state index generation unit (24) generates the state index by using an intensity of the spectroscopic spectrum in a frequency range that is not affected by a peak, generates the state index of the measurement object (OBJ) after applying correction of reducing an influence of a peak to the spectroscopic spectrum, or generates the state index based on a plurality of frequencies extracted at frequency intervals narrower than a width of a peak.

FIG. 2

**Description**

BACKGROUND OF THE INVENTION

Field of the Invention

The present disclosure relates to a state determination device, a state determination system, and a state determination method.

Description of Related Art

Japanese Unexamined Patent Publication No. 2008-164594 discloses a technique of irradiating an measurement object with electromagnetic waves, detecting the electromagnetic waves transmitted through or reflected by the measurement object, generating a spectroscopic spectrum of the measurement object from the detected electromagnetic waves, generating a state index of the measurement object based on the generated spectroscopic spectrum, and determining a state of the measurement object based on the state index. According to Japanese Unexamined Patent Publication No. 2008-164594, the state of the measurement object can be determined in a non-destructive manner.

SUMMARY OF THE INVENTION

In the related art as described in Japanese Unexamined Patent Publication No. 2008-164594, the state index is affected by a peak due to photon oscillation of molecules or crystals of the measurement object.
The present disclosure has been made in view of such a situation, and one exemplary object of an aspect of the present disclosure is to provide a technique that can determine a state of a measurement object with higher accuracy.
In order to achieve the above-described object, an aspect of the present disclosure provides a state determination device including: a state index generation unit that generates, based on a spectroscopic spectrum obtained from electromagnetic waves transmitted through a measurement object or reflected by the measurement object when the measurement object is irradiated with the electromagnetic waves, a state index for determining a state of the measurement object; and a state determination unit that determines the state of the measurement object based on the state index of the measurement object. The state index generation unit generates the state index using an intensity of the spectroscopic spectrum in a frequency range that is not affected by a peak, generates the state index of the measurement object after applying correction of reducing an influence of a peak to the spectroscopic spectrum, or generates the state index based on intensities of the spectroscopic spectrum at a plurality of frequencies extracted at frequency intervals of 1/2 or less of a width of a peak.
Another aspect of the present disclosure provides a state determination system. This system includes an irradiation unit that irradiates a measurement object with electromagnetic waves, and a detection unit that detects the electromagnetic waves transmitted through the measurement object or reflected by the measurement object, and the state determination device described above.
Still another aspect of the present disclosure provides a state determination method. This method is a state determination method of determining a state of a measurement object, the state determination method including: irradiating the measurement object with electromagnetic waves; detecting the electromagnetic waves transmitted through the measurement object or reflected by the measurement object; generating a state index for determining the state of the measurement object, based on a spectroscopic spectrum obtained from the detected electromagnetic waves; and determining the state of the measurement object based on the state index of the measurement object. In the generating of the state index, the state index is generated using an intensity of the spectroscopic spectrum in a frequency range that is not affected by a peak, the state index of the measurement object is generated after applying correction of reducing an influence of a peak to the spectroscopic spectrum, or the state index is generated based on intensities of the spectroscopic spectrum at a plurality of frequencies extracted at frequency intervals of 1/2 or less of a width of a peak.
Any combination of the above-described components, as well as any embodiments in which the components or expressions of the present disclosure are replaced with each other between methods, devices, systems, and the like are also valid aspects of the present disclosure.
According to the present disclosure, it is possible to provide the technique that can determine the state of the measurement object with higher accuracy.

BRIEF DESCRIPTION OF THE DRAWINGS

FIG. 1 is a diagram showing a schematic configuration of a state determination system according to an embodiment.

FIG. 2 is a block diagram showing a function and a configuration of a state determination device of FIG. 1.

FIG. 3 is a diagram showing an example of a spectroscopic spectrum of a measurement object.

FIG. 4 is a diagram showing a spectroscopic spectrum obtained by applying a single smoothing process to the spectroscopic spectrum of FIG. 3.

## DETAILED DESCRIPTION OF THE INVENTION

Hereinafter, a preferred embodiment will be described with reference to the accompanying drawings. The embodiment does not limit the present disclosure and is merely an exemplary embodiment, and all the features or combinations thereof described in the embodiment are not necessarily essential to the present disclosure. The same or equivalent components, members, and processes shown in the respective drawings will be denoted by the same reference numerals, and redundant description thereof will be omitted as appropriate.

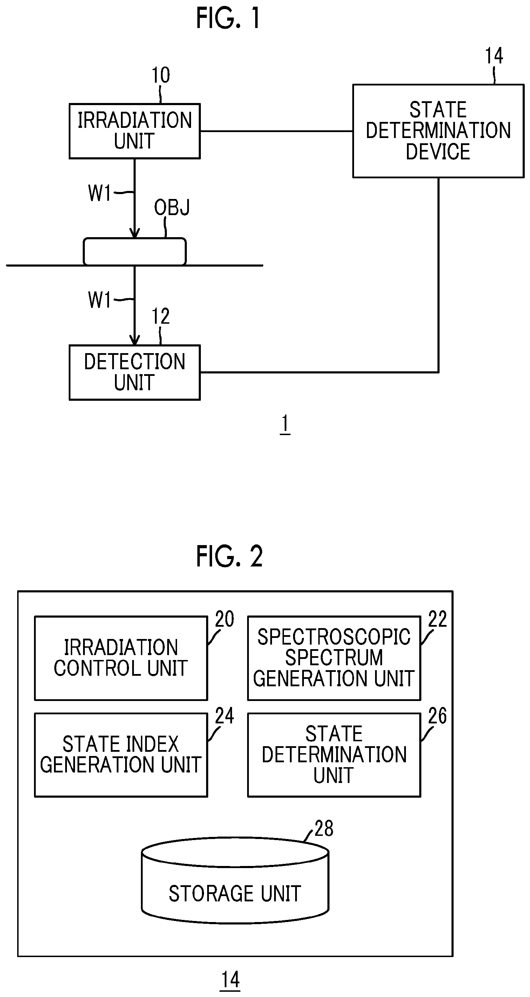

FIG. 1 is a diagram showing a schematic configuration of a state determination system 1 according to the embodiment. The state determination system 1 is a system that determines a state of a measurement object OBJ.

The measurement object OBJ is not particularly limited, and may be a high-molecular material such as a resin or rubber. The resin may be, for example, a polyolefin-based resin such as polyethylene or polypropylene. The measurement object OBJ may be a material before processing, such as molding or kneading, is performed, or may be a processed molding product.

In the present embodiment, the state of the measurement object OBJ is a state relating to the degradation of the measurement object OBJ, for example, a state of characteristics of the measurement object OBJ, which change due to the degradation. As an example, when the measurement object OBJ is a resin, the characteristic is melt viscosity of the measurement object OBJ.

The state determination system 1 includes an irradiation unit 10, a detection unit 12, and a state determination device 14. The irradiation unit 10 and the detection unit 12 are connected to the state determination device 14.

The irradiation unit 10 irradiates the measurement object OBJ with electromagnetic waves W1. The detection unit 12 detects electromagnetic waves W2 obtained as a result of irradiating the measurement object OBJ with the electromagnetic waves W1. The electromagnetic waves W2 may be the electromagnetic waves W2 transmitted through the measurement object OBJ as shown. Alternatively, the electromagnetic waves W2 may be the electromagnetic waves W2 reflected by the measurement object OBJ. A detection result of the electromagnetic waves W2, which is generated by the detection unit 12, is supplied to the state determination device 14.

The state determination device 14 generates a spectroscopic spectrum based on a relationship between the electromagnetic waves W1 applied by the irradiation unit 10 and the electromagnetic waves W2 detected by the detection unit 12. The spectroscopic spectrum is an absorbance spectrum in the present embodiment. The spectroscopic spectrum may be a transmittance, reflectance, or phase difference spectrum. The state determination device 14 determines the state of the measurement object OBJ based on the spectroscopic spectrum.

The electromagnetic waves W1 are electromagnetic waves that can determine the state of the measurement object OBJ. The electromagnetic waves W1 may be electromagnetic waves in a frequency range associated with oscillation of polymer chains and crystal lattices, and may be, for example, electromagnetic waves in a terahertz range of 1 THz to 2 THz, or may be, for example, electromagnetic waves in an infrared range.

FIG. 2 is a block diagram showing a function and a configuration of the state determination device 14. Although each block shown in FIG. 2 can be implemented in hardware by elements and electronic circuits such as a processor, a CPU, and a memory of a computer, as well as mechanical devices, and can be implemented in software by computer programs or the like, here, functional blocks implemented through their collaboration are shown. Accordingly, it is understood by those skilled in the art that these functional blocks can be implemented in various forms by a combination of hardware and software.

The state determination device 14 includes an irradiation control unit 20, a spectroscopic spectrum generation unit 22, a state index generation unit 24, a state determination unit 26, and a storage unit 28. The storage unit 28 stores information used in the state determination device 14.

The irradiation control unit 20 controls the irradiation unit 10. The irradiation control unit 20 controls on/off of the irradiation unit 10, that is, a timing of the irradiation with the electromagnetic waves.

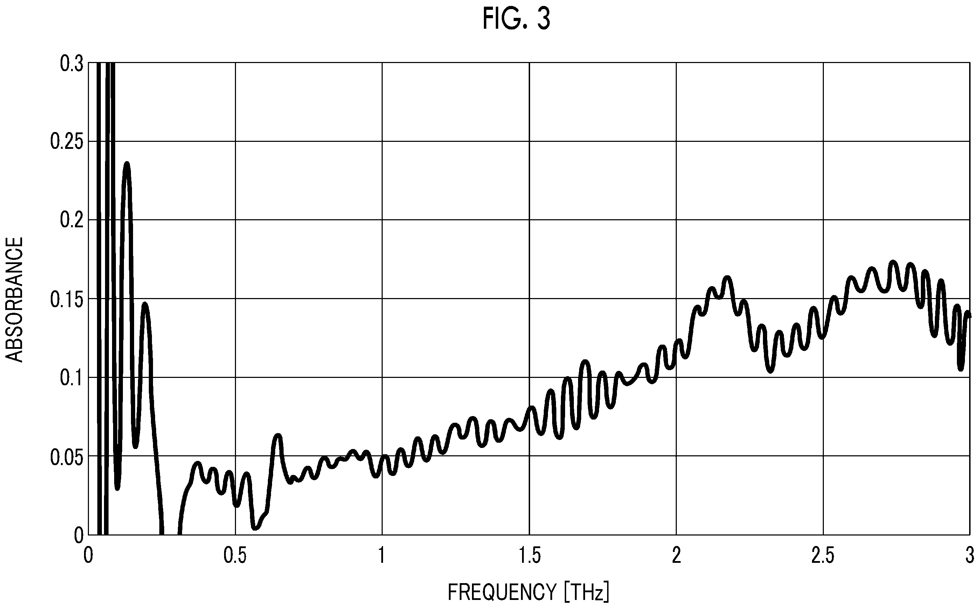

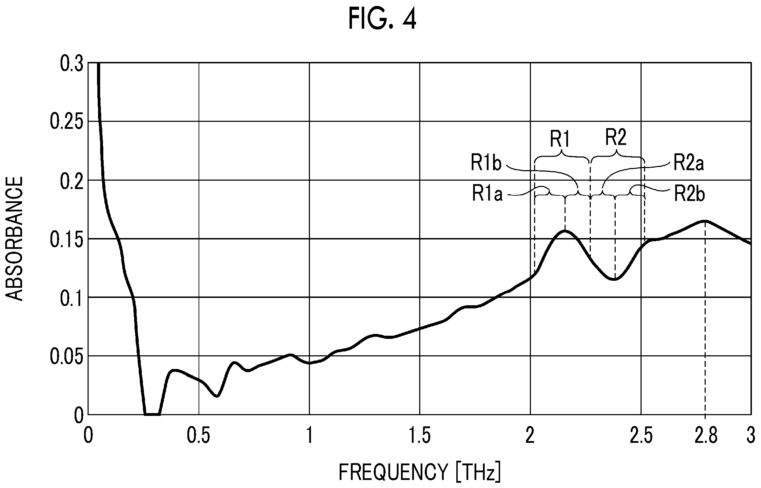

The spectroscopic spectrum generation unit 22 generates the spectroscopic spectrum of the measurement object OBJ from the electromagnetic waves W2 detected by the detection unit 12. FIG. 3 is a diagram showing an example of the spectroscopic spectrum of the measurement object OBJ. The spectroscopic spectrum generation unit 22 may apply a smoothing process to the spectroscopic spectrum. FIG. 4 is a diagram showing a spectroscopic spectrum obtained by applying a single smoothing process to the spectroscopic spectrum of FIG. 3.

The state index generation unit 24 generates a state index, which is an index for determining the state of the measurement object OBJ, based on the spectroscopic spectrum of the measurement object OBJ generated by the spectroscopic spectrum generation unit 22. Here, the spectroscopic spectrum tends to monotonically increase or decrease as the frequency increases. In addition, the spectroscopic spectrum tends to exhibit a larger slope as the degradation of the measurement object OBJ progresses. Therefore, the state of the degradation of the measurement object OBJ can be determined from magnitude of the slope of the spectroscopic spectrum of the measurement object OBJ or an intensity level of the spectroscopic spectrum at a specific frequency or in a specific frequency range. What to use as the state index need only be determined by taking this into account.

In the present embodiment, the state index is not particularly limited, and may be any of the following state indexes 1 to 5.

State index 1: Intensity of spectroscopic spectrum at specific frequency
State index 2: First derivative value of spectroscopic spectrum at specific frequency
State index 3: Change amount of spectroscopic spectrum in specific frequency range
State index 4: Average value of intensities of spectroscopic spectrum in specific frequency range
State index 5: Average value of first derivative values of spectroscopic spectrum in specific frequency range

The change amount of the state index 3 need only be calculated using a known technique or a technique that may become available in the future. For example, the change amount of the state index 3 may be calculated by fitting a straight line.

Regardless of the performance of the employed detection unit 12, differences notwithstanding, a detectable frequency range is limited, and an S/N ratio is extremely low in a low frequency range (a frequency range of 1 THz or less in the example of FIG. 4) and a high frequency range (a frequency range of 2.8 THz or more in the example of FIG. 4). Therefore, these frequency ranges are excluded regardless of which state index is employed.

The state index generation unit 24 may generate the state indexes 1 to 5 of the measurement object OBJ using only a frequency range that is not affected by a peak due to the photon oscillation in the spectroscopic spectrum (hereinafter, simply referred to as a peak). The frequency range that is not affected by the peak may be a frequency range excluding a frequency range R1 of the peak. In a case where the spectroscopic spectrum has a frequency range R2 which is adjacent to a high frequency side of the frequency range R1 of the peak as in the example of FIG. 4 and in which the intensity significantly decreases, the frequency range that is not affected by the peak may be a frequency range excluding the frequency ranges R1 and R2. The frequency range R1 is the same as or wider than the frequency range R2. In a case where the state index generation unit 24 generates the state index 3, the state index generation unit 24 may generate the state index 3 using both a frequency in a frequency range lower than the frequency range R1 and a frequency in a frequency range higher than the frequency range R1 when the spectroscopic spectrum does not have the frequency range R2, and generate the state index 3 using both a frequency in a frequency range lower than the frequency range R1 and R2 and a frequency in a frequency range higher than the frequency range R1 and R2 when the spectroscopic spectrum has the frequency range R2.

The frequency ranges R1 and R2 may be identified from the literature. The frequency ranges R1 and R2 may be identified by performing an experiment in advance. The frequency ranges R1 and R2 may be identified by analyzing the spectroscopic spectrum using a known technique or a technique that may become available in the future. For example, the frequency range R1 may be a frequency range in which a frequency of the local maximum and a frequency of the local minimum in a first-derivative spectrum obtained by taking the first derivative of the spectroscopic spectrum are a lower limit frequency and an upper limit frequency, respectively.

The state index generation unit 24 may apply correction of reducing the influence of the peak, that is, removing the peak to a portion of the spectroscopic spectrum in which the peak is present. This correction need only be carried out by using a known technique or a technique that may become available in the future. In this case, the state index generation unit 24 may generate the state indexes 1 to 5 using a frequency in a frequency range in which the peak is present before the correction in addition to or instead of a frequency in a frequency range in which the peak is not present before the correction.

The state index generation unit 24 may smooth the spectroscopic spectrum to such an extent that the influence of the peak is eliminated. For example, the state index generation unit 24 may apply the smoothing process to the spectroscopic spectrum a predetermined number of times (for example, 10 times) in advance in order to eliminate the influence of the peak. A known technique need only be used for the smoothing process. In a case where the spectroscopic spectrum is smoothed, the state index generation unit 24 may generate the state indexes 1 to 5 using a frequency in a frequency range in which the peak is present before the smoothing.

The state index generation unit 24 may calculate the state index based on intensities of the spectroscopic spectrum at a plurality of frequencies extracted at frequency intervals of 1/2 or less of a width of the peak, that is, a width of the frequency range R1, in the spectroscopic spectrum, for example, at frequency intervals of 0.1 THz. In this case, the state index generation unit 24 may calculate the state index 5 based on intensities of the spectroscopic spectrum at a plurality of frequencies including the frequency in the frequency range R1 or intensities of the spectroscopic spectrum at a plurality of frequencies including the frequencies in the frequency ranges R1 and R2. Here, within the frequency range R1 of the peak of the spectroscopic spectrum, a first derivative value is positive in a frequency range R1a from the start of the frequency range R1 to a convex-up apex, and the first derivative value is negative in a frequency range R1b from the apex to the end of the frequency range R1. In addition, in a case where the spectroscopic spectrum has the frequency range R2 as in the example of FIG. 4, within the frequency range R2, a first derivative value is negative in a frequency range R2a from the start of the frequency range R2 to a convex-down apex, and the first derivative value is positive in a frequency range R2b from the apex to the end of the frequency range R2. The widths of the frequency ranges R1a, R1b, R2a, and R2b are approximately 1/2 or less of the width of the peak. Therefore, the plurality of frequencies extracted at the frequency intervals of 1/2 or less of the width of the peak include the intensity of the spectroscopic spectrum at the frequency in the frequency range R1a as well as the intensity of the spectroscopic spectrum at the frequency in the frequency range R1b, or include the intensity of the spectroscopic spectrum at the frequency in the frequency range R1a and R2a as well as the intensity of the spectroscopic spectrum at the frequency in the frequency range R1b and R2b, and thus the influence of the peak is offset as a result.

The state determination unit 26 determines the state of the measurement object OBJ based on the state index of the measurement object OBJ generated by the state index generation unit 24. The state determination unit 26 may be able to execute at least one of a first determination process and a second determination process as a process of determining the state of the measurement object OBJ.

The first determination process is a process of determining (specifying) the state of the measurement object OBJ based on relationship information representing a relationship between a state index of a reference object and a state of the reference object.

For example, the storage unit 28 may store a function (calculation expression) representing the relationship between the state index of the reference object and the state of the reference object as the relationship information, and the state determination unit 26 may determine the state of the measurement object OBJ by substituting the state index of the measurement object OBJ into the function to perform calculation as the first determination process.

For example, the storage unit 28 may store a look-up table that defines the relationship between the state index of the reference object and the state of the reference object as the relationship information, and the state determination unit 26 may determine the state of the measurement object OBJ by referring to the look-up table as the first determination process.

In a case where the measurement object OBJ is a resin, the state of the measurement object OBJ determined in the first determination process may be melt viscosity with respect to a temperature of the measurement object OBJ. In this case, the state index is generated in advance for the reference object having various degrees of degradation, the melt viscosity is measured, and the relationship information between the state index and the melt viscosity is stored in the storage unit 28. The state index need only be generated by using the state determination system 1. The melt viscosity need only be measured by using a device such as a capillary rheometer. The melt viscosity can be utilized, for example, when the measurement object OBJ is a material before processing, as information for identifying a degradation state of the measurement object OBJ for sorting, for determining kneading conditions in kneading using the measurement object OBJ, and for determining molding conditions in subsequent forming using the measurement object OBJ.

In a case where the measurement object OBJ is a resin, the state of the measurement object OBJ determined in the first determination process may be a melt flow rate (MFR) of the measurement object OBJ or a molecular weight of the measurement object OBJ. The MFR and the molecular weight may differ depending on, for example, the degree of degradation of the measurement object OBJ.

The state of the measurement object OBJ determined in the first determination process may be a state of the measurement object OBJ, which can be evaluated in a tensile test, more specifically, may be a tensile strength, stress, a yield point, elongation, or a strain of the measurement object OBJ.

The state of the measurement object OBJ determined in the first determination process may be a state of the measurement object OBJ, which can be evaluated in a Charpy impact test, more specifically, may be an impact resistance or toughness of the measurement object OBJ.

The state of the measurement object OBJ determined in the first determination process may be a bending strength, a bending strain, or a bending elastic modulus of the measurement object OBJ, which can be evaluated in a bending test.

Regardless of which state is to be determined, tests and the like are performed in advance to prepare the relationship information representing the relationship between the state index and the state of the reference object.

The second determination process is a process of determining the state of the measurement object OBJ based on a difference between the state index of the reference object and the state index of the measurement object OBJ.

The state of the measurement object OBJ determined in the second determination process may be whether or not the measurement object OBJ is degraded. In this case, the reference object is a material, product, or the like that is the same as the measurement object OBJ and that is not degraded. As the second determination process, the state determination unit 26 may determine that the measurement object OBJ is not degraded when a difference between the state index of the reference object and the state index of the measurement object OBJ is equal to or smaller than a threshold, and determine that the measurement object OBJ is degraded when the difference between the state index of the reference object and the state index of the measurement object OBJ is larger than the threshold.

The state determination unit 26 presents a determination result to a user. For example, the state determination unit 26 may visually present the determination result to the user by displaying the determination result on a display unit (not shown).

The basic configuration of the state determination system 1 has been described above. Subsequently, the operation of the state determination system 1 will be described.

The storage unit 28 stores, in advance, relationship information representing a relationship between the state index and the state for the reference object in various states, that is, having various degrees of degradation. The irradiation unit 10 irradiates the measurement object OBJ with the electromagnetic waves W1, and the detection unit 12 detects the electromagnetic waves W2 transmitted through the measurement object OBJ or reflected by the measurement object OBJ. The state determination device 14 generates the spectroscopic spectrum from the electromagnetic waves W2, and generates the state index based on the spectroscopic spectrum. The state determination device 14 determines the state corresponding to the state index with reference to the relationship information stored in the storage unit 28.

According to the present embodiment, it is possible to avoid or reduce the influence of the peak due to the photon oscillation of crystals, so that the state of the measurement object OBJ can be determined with higher accuracy.

The present disclosure has been described above based on the embodiment. The embodiments are merely exemplary embodiments, and those skilled in the art will appreciate that various modification examples can be made in the combinations of the respective components and process steps of the embodiments, and that such modification examples also fall within the scope of the present disclosure. Hereinafter, such modification examples will be described.

(Modification Example 1)

In a case where the reference object and the measurement object OBJ are irradiated with the same electromagnetic waves W1, even when the reference object and the measurement object OBJ are the same material and have the same degradation state, the absorbance increases when the measurement object OBJ is thicker than the reference object, and the absorbance decreases when the measurement object OBJ is thinner than the reference object. Therefore, in a case where the thickness of the reference object and the thickness of the measurement object OBJ are different from each other, even when the conditions other than the thickness are exactly the same, the state index of the reference object and the state index of the measurement object OBJ are different from each other, and it may be determined that the states are different from each other. Therefore, in order to further accurately determine the state of the measurement object OBJ, in a case where the thickness of the reference object and the thickness of the measurement object OBJ are different from each other, the difference may be taken into account.

Specifically, the state index generation unit 24 applies correction that takes the difference in thickness between the reference object and the measurement object OBJ to the spectroscopic spectrum ($I_{OBJ}$) of the measurement object OBJ into account before generating the state index of the measurement object OBJ. The spectroscopic spectrum ($I_{OBJ}$) of the measurement object OBJ to which the correction is applied is represented by the following expression (1).

$$I'_{OBJ} = \frac{I_{OBJ}}{I_{ref}^{\left(\frac{x_{OBJ}}{x_{ref}} - 1\right)}} \quad \dots (1)$$

Here,

$I_{ref}$ is the spectroscopic spectrum of the reference object,
$x_{ref}$ is the thickness of the reference object, and
$x_{OBJ}$ is the thickness of the measurement object OBJ.

The thickness $x_{ref}$ of the reference object and the thickness $x_{OBJ}$ of the measurement object OBJ need only be measured by using a known measuring instrument such as a micrometer.

According to the present modification example, even when the thickness of the reference object and the thickness of the measurement object OBJ are different from each other, the state of the measurement object OBJ can be determined with high accuracy.

(Modification Example 2)

In the embodiment and the above-described modification example, a case has been described in which the state of the measurement object OBJ is the state related to the degradation, but the present disclosure is not limited to this.
For example, the second determination process may be a process of determining the state of the measurement object OBJ, more specifically, whether or not the state of the measurement object OBJ is different from the state of the reference object, based on a difference between the state index of the reference object and the state index of the measurement object OBJ. For example, the state of the measurement object OBJ may be whether or not the measurement object OBJ is defective. For example, in a case where the measurement object OBJ is defective when the molecular weight of the measurement object OBJ is small, when the slope of the spectroscopic spectrum tends to increase as the molecular weight of the measurement object OBJ decreases, it can be determined whether or not the measurement object OBJ is defective, as in a case of degradation.
Any combination of the embodiments and modification examples described above is also useful as an embodiment of the present disclosure. A new embodiment made from the combination has the effects of each of the embodiments and modification examples that are combined.

Brief Description of the Reference Symbols

1:      state determination system
10:     irradiation unit
12:     detection unit
14:     state determination device
24:     state index generation unit
26:     state determination unit
28:     storage unit

**Claims**

1. A state determination device (14) comprising:

   a state index generation unit (24) that generates, based on a spectroscopic spectrum obtained from electromagnetic waves transmitted through a measurement object (OBJ) or reflected by the measurement object (OBJ) when the measurement object (OBJ) is irradiated with the electromagnetic waves, a state index for determining a state of the measurement object (OBJ); and
   a state determination unit (26) that determines the state of the measurement object (OBJ) based on the state index of the measurement object (OBJ),
   wherein the state index generation unit (24) generates the state index by using an intensity of the spectroscopic spectrum in a frequency range that is not affected by a peak, generates the state index of the measurement object (OBJ) after applying correction of reducing an influence of a peak to the spectroscopic spectrum, or generates the state index based on intensities of the spectroscopic spectrum at a plurality of frequencies extracted at frequency intervals of 1/2 or less of a width of a peak.

2. The state determination device (14) according to claim 1,
   wherein the state determination unit (26) determines the state of the measurement object (OBJ) based on a difference between the state index of the measurement object (OBJ) and a state index of a reference object.

3. The state determination device (14) according to claim 1,
   wherein the state determination unit (26) determines the state of the measurement object (OBJ) based on relationship information representing a relationship between a state index of a reference object and a state of the reference object.

4. The state determination device (14) according to claim 1,
   wherein the state index is an intensity of the spectroscopic spectrum at a specific frequency, a first derivative value of the spectroscopic spectrum at a specific frequency, a change amount of the spectroscopic spectrum in a specific frequency range, an average value of intensities of the spectroscopic spectrum in a specific frequency range, or an average value of first derivative values of the spectroscopic spectrum in a specific frequency range.

5. The state determination device (14) according to claim 2 or 3,
wherein the state index generation unit (24) applies correction that takes a difference in thickness between the measurement object (OBJ) and the reference object to the spectroscopic spectrum into account before generating the state index of the measurement object (OBJ).

6. The state determination device (14) according to claim 1,
wherein the electromagnetic waves with which the measurement object (OBJ) is irradiated are electromagnetic waves in a frequency range of 1 THz to 2 THz.

7. A state determination system (1) comprising:

an irradiation unit (10) that irradiates a measurement object (OBJ) with electromagnetic waves;
a detection unit (12) that detects the electromagnetic waves transmitted through the measurement object (OBJ) or reflected by the measurement object (OBJ); and
the state determination device (14) according to claim 1.

8. A state determination method of determining a state of a measurement object (OBJ), the state determination method comprising:

irradiating the measurement object (OBJ) with electromagnetic waves;
detecting the electromagnetic waves transmitted through the measurement object (OBJ) or reflected by the measurement object (OBJ);
generating a state index for determining the state of the measurement object (OBJ), based on a spectroscopic spectrum obtained from the detected electromagnetic waves; and
determining the state of the measurement object (OBJ) based on the state index of the measurement object (OBJ),
wherein, in the generating of the state index, the state index is generated by using an intensity of the spectroscopic spectrum in a frequency range that is not affected by a peak, the state index of the measurement object (OBJ) is generated after applying correction of reducing an influence of a peak to the spectroscopic spectrum, or the state index is generated based on intensities of the spectroscopic spectrum at a plurality of frequencies extracted at frequency intervals of 1/2 or less of a width of a peak.

# FIG. 1

1

# FIG. 2

14

FIG. 3

EP 4 745 560 A1

FIG. 4

EP 4 745 560 A1

Europäisches
Patentamt

European
Patent Office

Office européen
des brevets

# EUROPEAN SEARCH REPORT

Application Number

EP 25 18 7863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COLIN BAKER: "People screening using terahertz technology (Invited Paper)", PROCEEDINGS OF SPIE, VISUAL COMMUNICATIONS AND IMAGE PROCESSING 2005, vol. 5790, 2005, pages 1-10, XP055015462, Visual Communications and Image Processing 2005, 2005, Beijing, China ISSN: 0277-786X, DOI: 10.1117/12.602976 | 1-4,6-8 | INV. G01N21/3581 |
| Y | * figures 1,3,7-9 * <br> * page 7, last paragraph * <br> ----- | 5 | |
| X | WO 2012/059210 A1 (FRAUNHOFER GES FORSCHUNG [DE]; HUEBNER GMBH [DE] ET AL.) 10 May 2012 (2012-05-10) | 1-4,6-8 | |
| Y | * page 1, paragraph 1 * <br> * page 3, paragraph 3 * <br> * page 4, paragraph 3 - page 5, paragraph 1 * <br> * page 6, paragraph 2 * <br> * figures 1,5a,5b,7 * <br> ----- | 5 | |
| X | KANEKO TAKUYA ET AL: "Degradation mechanisms of silicone rubber under different aging conditions", POLYMER DEGRADATION AND STABILITY, BARKING, GB, vol. 168, 6 August 2019 (2019-08-06), XP085831194, ISSN: 0141-3910, DOI: 10.1016/J.POLYMDEGRADSTAB.2019.108936 [retrieved on 2019-08-06] | 1-4,6-8 | TECHNICAL FIELDS SEARCHED (IPC) <br><br> G01N |
| Y | * abstract * <br> * page 2, right-hand column, paragraph 3 - page 3, left-hand column, paragraph 1 * <br> * page 6, left-hand column, lines 10-16, paragraph 2 * <br> * page 8, right-hand column, paragraph 4-5 * <br> * figures 1,10 * <br> ----- | 5 | |

The present search report has been drawn up for all claims

| Place of search | Date of completion of the search | Examiner |
|---|---|---|
| Munich | 6 November 2025 | Consalvo, Daniela |

EPO FORM 1503 03.82 (P04C01)

## ANNEX TO THE EUROPEAN SEARCH REPORT
## ON EUROPEAN PATENT APPLICATION NO.

EP 25 18 7863

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | Publication date | Patent family member(s) | Publication date |
|---|---|---|---|
| WO 2012059210 A1 | 10-05-2012 | DE 102010050198 B3 | 19-01-2012 |
| | | EP 2635882 A1 | 11-09-2013 |
| | | ES 2578353 T3 | 26-07-2016 |
| | | WO 2012059210 A1 | 10-05-2012 |

EPO FORM P0459

For more details about this annex : see Official Journal of the European Patent Office, No. 12/82

**EP 4 745 560 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008164594 A